Europäisches Patentamt

European Patent Office

Office européen des brevets

(11) Publication number: **0 224 989 B1**

# EUROPEAN PATENT SPECIFICATION

(45) Date of publication of patent specification: **11.12.91**   (51) Int. Cl.⁵: **C08G 73/00, C25B 3/10, H01M 4/60, H01M 10/36**

(21) Application number: **86306512.4**

(22) Date of filing: **21.08.86**

The file contains technical information submitted after the application was filed and not included in this specification

(54) **Polyaniline having fibrillar structure, process for preparing the same and secondary cell using the same.**

(30) Priority: 21.08.85 JP 183422/85
17.10.85 JP 233002/85
09.01.86 JP 2599/86
21.02.86 JP 37659/86
02.06.86 JP 128917/86

(43) Date of publication of application:
10.06.87 Bulletin 87/24

(45) Publication of the grant of the patent:
11.12.91 Bulletin 91/50

(84) Designated Contracting States:
DE FR GB

(56) References cited:
FR-A- 2 553 581

BULLETIN OF THE CHEMICAL SOCIETY OF JAPAN, vol. 57, no. 5, 1984, A. KITANI et al. "Basic behaviors and properties of the electrodeposited polyaniline", pages 2254-2257

(73) Proprietor: **SUMITOMO CHEMICAL COMPANY, LIMITED**
**Kitahama 4-chome 5-33**
**Chuo-ku Osaka 541(JP)**

(72) Inventor: **Taguchi, Satoshi**
**19-10-204, Shinashiyakami**
**Suita-shi(JP)**
Inventor: **Tanaka, Toshihiko**
**2-40, Hirata-1-chome**
**Ibaraki-shi(JP)**

(74) Representative: **Tubby, David George et al**
**MARKS & CLERK 57-60 Lincoln's Inn Fields**
**London WC2A 3LS(GB)**

## Description

This invention relates to a polyaniline having a fibrillar structure, to a process for preparing the same, and to a secondary cell using as its cathode material said polyaniline having a fibrillar structure in which the average diameter of the fibrils is 0.5 μm or less.

Great interest has been shown in recent years in the use of organic compounds (such as polyacetylene, polypyrrole, etc.) for secondary cells and other electronic devices such as display elements, junction elements, etc., and attention has been drawn to polyaniline as one such material.

Polyaniline is synthesized by oxidizing aniline. A chemical oxidative polymerization method in which there is utilized the oxidative action of a peroxide, metal ions or metal complex compound in the polymerization of aniline, and a method in which aniline is subjected to electrochemical polymerization in an acidic aqueous solution have been used. However, polyanilines having a fibrillar structure were hitherto unknown.

In the case of chemical oxidative polymerization, polyaniline is for instance synthesized by subjecting aniline to oxidative polymerization with an oxidizing agent such as ammonium persulfate as reported by A.G. Macdarmid et al in Molecular Crystals and Liquid Crystals, Vol. 119 No. 1-4, Part E, pp. 173-180 (1985). We have found, however, that polyaniline prepared from said chemical oxidative polymerization had the form of an agglomerate of particles. On the other hand, polyaniline obtained by the electrochemical polymerization method is deposited on the electrode substrate to coat it in the form of a smooth film. For instance, A.F. Diaz et al report in The Journal of Electroanalytical Chemistry Vol. 111, pp. 111-114 (1980), that a plane film-like polyaniline deposit was obtained on a Pt electrode by carrying out electrochemical polymerization in a sulfuric acid solution of aniline at a potential between -0.2 and +0.8 V vs a saturated calomel electrode.

Also, Kitani et al have studied a secondary cell using filmy or powdery polyaniline as the cathode material [DENKI KAGAKU, Vol. 53, No. 8, pp. 592-596 (1985)]. The discharge capacity of this secondary cell, however, is not always satisfactory for practical use.

In FR-A-2553581, there is disclosed the use of polyaniline, including fibrillar polyaniline having a diameter greater than 1μm, in such cells. However, the discharge available was not much greater than that in cells already available.

According to the present invention, polyaniline having a fibrillar structure, wherein the average fibril diameter is 0.5μm or less, is provided.

The present invention also provides a process for producing such polyaniline having a fibrillar structure by subjecting aniline to electrochemical polymerization in an acidic aqueous solution, which process is characterized in that said solution is adjusted to an acid concentration of 0.2N or above and an aniline concentration of 0.1 mole/litre or above, and that the quantity of electricity applied at the time of polymerization is controlled to the following range (A) or (B):

(A) from 0.1 to 20 coulomb/cm$^2$ (hereinafter referred to as C/cm$^2$) when the temperature used for the electrochemical polymerization is below 40°C;

(B) 0.1-1,000 C/cm$^2$, when the temperature used for the electrochemical polymerization is 40°C or higher.

According to the present invention, there is further provided a secondary cell which is characterized by using, as its cathode material, polyaniline having a fibrillar structure in which the average diameter of the fibrils is 0.5 μm or less.

In the course of our studies on obtaining polyaniline having a fibrillar structure (which is expected to win wide use in many fields of industry) and for working out a process for preparing such a polyaniline, we found that, in the preparation of polyanilines by the electrochemical polymerization of aniline, the structural form of the polyaniline produced is greatly influenced by the quantity of electricity applied at the time of polymerization as well as by the aniline and acid concentrations. A polyaniline having a desired fibrillar structure can be obtained by properly controlling, in particular, the quantity of electricity applied at the time of polymerization in said electrochemical polymerization process.

We also found that, among the polyanilines having a fibrillar structure obtained in the manner described above, those having a fibrillar structure composed of fibrils having an average diameter of 0.5 μm or less show a maximum discharge capacity of 550 mC/mg or above, as calculated based on the weight of polyaniline exclusive of dopant, and also exhibit high performance in the charging and discharging cycles.

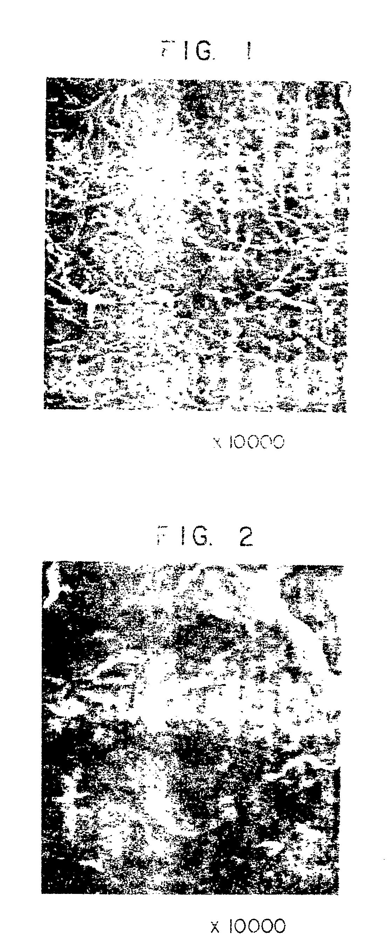

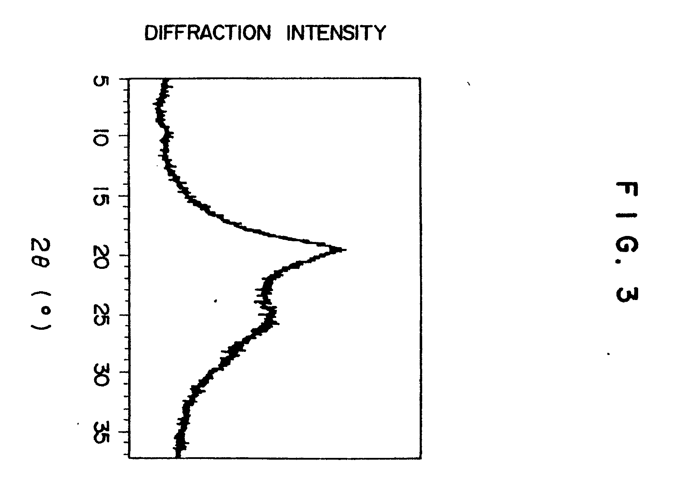

In the accompanying drawings, Figures 1 and 2 are scanning electron microphotographs (magnified 10,000 times) showing the fibrillar structures of polyaniline obtained in the examples of this invention.

Figure 3 is an X-ray diffraction pattern of polyaniline obtained in an example of this invention, in which diffraction intensity is plotted as the ordinate and 2θ (°C) as the abscissa.

2

Figure 4 is a scanning electron microphotograph (magnified 10,000 times) showing the particulate structure of polyaniline obtained in a comparative example.

Polyaniline of this invention has a fibrillar structure. The fibrils preferably have an average diameter of 0.5 $\mu$m or less, more preferably 0.3 $\mu$m or less, most preferably 0.2 $\mu$m or less. Since the fibrils are entangled with each other randomly, it is impossible to measure the length of individual fibrils. Also, no solvent suitable for dissolving such fibrils has yet been found. Polyaniline having such a fibrillar structure can be produced by carrying out an electrochemical polymerization of aniline in the presence of an acid under the specified conditions.

It is also possible to obtain crystalline polyaniline having a fibrillar structure by properly selecting the electrochemical polymerization conditions.

Any type of acid can be used for said electrochemical polymerization provided that such acid is stable under the electrochemical polymerization conditions used and is also capable of forming a salt with aniline and dissolving the latter in the aqueous solution used for the polymerization. Examples of such acids are perchloric acid, periodic acid, sulfuric acid, hydrochloric acid, hydrobromic acid, hydrofluoroboric acid, hexafluorophosphoric acid, p-toluenesulfonic acid. methanesulfonic acid and the like. Of these, hydrofluoroboric acid, perchloric acid, sulfuric acid, hydrochloric acid and hexafluorophosphoric acid are preferred. Hydrofluoroboric acid and perchloric acid are especially preferred as they allow formation of the desirable fibrils, which is hardly affected by the electrochemical polymerization conditions.

The acid concentration in the aqueous solution used for the polymerization is not critical in this invention, but the acid is usually used in a concentration of 0.2N or above, preferably in the range of from 0.2 to 8.0N, more preferably from 0.5 to 4.0N. The aniline concentration in the aqueous solution should be not less than 0.1 mole/litre, preferably from 0.2 to 4.0 mole/litre, more preferably from 0.3 to 3.9 mole/litre. It is desirable that the aniline concentration should not exceed the normal concentration of acid, and the aniline concentration is preferably at a level which can keep the electrolyte pH below 3. It is especially desirable that the aniline concentration should be below 2/3 of the normal concentration acid. The purity of aniline used in this invention is not particularly important, but a purity of 95% or above is preferred.

Various methods are available for carrying out the electrochemical polymerization by using an acidic aqueous solution of aniline prepared to meet said requirements. For example, the constant-current method, constant-potential method, constant-voltage method, potential scanning method and potential step method can be used, among which the constant-current method and constant-potential method are preferred for achieving the desired control of electricity.

The current density in the electrochemical polymerization may vary depending on the aniline concentration, acid concentration and polymerization temperature, but it is usually in the range of from 0.001 to 500 mA/cm². Especially, when the temperature used for the electrochemical polymerization is below 40°C, the current density for the polymerization is preferably in the range of from 0.001 to 50 mA/cm², more preferably from 0.1 to 20 mA/cm², most preferably from 0.3 to 10 mA/cm², and, when the polymerization temperature is 40°C or higher, the current density is preferably in the range of from 20 to 200 mA/cm², most preferably from 40 to 100 mA/cm². When using the constant-potential or constant-voltage method, the operating conditions are properly selected so that the current density will come within said range. For example, in the case of the constant-potential method, use of a potential in the range of from 0.8 to 10 V vs Ag/AgCl is preferred, the range of from 0.8 to 2.0 V vs Ag/AgCl being especially preferred.

The temperature at which the electrolytic oxidative polymerization is carried out in this invention is such that the electrolyte can remain in a state of solution, that is, such temperature is above the freezing point and below the boiling point of the electrolyte, but usually it is in the range of from 10 to 90°C. A temperature above 40°C is preferred when producing crystalline fibrillar polyaniline. The quantity of electricity to be applied for the polymerization is preferably in the range of from 0.1 to 20 C/cm², more preferably from 0.1 to 15 C/cm², most preferably from 0.1 to 7 C/cm², when the polymerization temperature is below 40°C. It should be in the range of from 0.1 to 1,000 C/cm², preferably from 0.1 to 200 C/cm² when the polymerization temperature is 40°C or higher. Although fibrillar polyaniline may be produced even when the quantity of electricity applied is less than 0.1 C/cm², in this case the operation is industrially impractical in terms of productivity. Use of electricity in excess of said ranges is also undesirable since in this case amorphous polyaniline is also produced in a high percentage. It is to be also noted that, when the electrochemical polymerization temperature is below 40°C and the quantity of electricity applied exceeds 20 C/cm², the fibrillar structure produced tends to break. In the present invention, it is possible to control the diameter of the fibrils by proper adjustment of the quantity of electricity applied and the current density within said ranges. For instance, when the electrochemical polymerization temperature is below 40°C, it is possible to obtain fibrils having an average diameter of less than 0.5 $\mu$m, preferably less than 0.3 $\mu$m, more preferably less than 0.2 $\mu$m. Also, when the electrochemical polymerization temperature is above 40°C, there can be obtained highly crystalline fibrils which are oblong or close to oblong in sectional shape.

It is unknown why the fibril diameter and configuration are subject to change according to these conditions, but there is noted a tendency for the fibril diameter to become smaller as the current density increases. The fibril configuration is also influenced by the type and concentration of the acid used and the aniline concentration, so that it is essential to select these conditions properly.

The electrode material used in this invention is not critical and it is possible to use any suitable type of material which is stable under the electrochemical polymerization conditions. Typical examples of such electrode materials are platinum, gold, graphite, carbon, tin oxide, indium oxide - tin oxide (ITO) and the like. These materials may be used either individually or supported on a glass or resin film, or as a composite material.

It is possible to obtain polyaniline having the desired fibrillar structure in the manner described above, but such polyaniline usually contains anions of the acid used as a dopant. Since the fibrillar structure of the polyaniline produced is unaffected even if the polyaniline produced is subjected to a treatment for removing said anions (undoping) by passing an inverse current or by applying an inverse voltage, it is possible to carry out doping and undoping of the produced polyaniline according to the intended use.

The fibrils of the fibrillar polyaniline used for a secondary cell in accordance with this invention have an average diameter of 0.5 $\mu$m or less, preferably 0.3 $\mu$m or less, more preferably 0.2 $\mu$m or less.

When the polyaniline having a fibrillar structure of this invention is employed in a secondary cell, any dopant commonly used for ordinary conjugated high molecular compounds, such as polyacetylene, can be effectively used. Examples of such dopants are: halide ions such as $PF_6^-$, $SbF_6^-$, $AsF_6^-$, $I^-$, $Br^-$, $Cl^-$, $I_3^-$, $BF_4^-$, $AlCl_4^-$, etc;
perhalide ions such as $ClO_4^-$; organosulfonate ions such as $CF_3SO_3^-$, $CH_3-Ph-SO_3^-$, $CH_3SO_3^-$, etc.; and $SO_4^{2-}$, $NO_3^-$ and the like. (Ph = phenylene). Actually, salts containing these ions are used in the form of an electrolyte. Examples of such electrolytes are $LiPF_6$, $LiSbF_6$, $LiAsF_6$, $LiClO_4$, $NaI$, $NaPF_6$, $NaSbF_6$, $NaAsF_6$, $NaClO_4$, $KI$, $KPF_6$, $KSbF_6$, $KAsF_6$, $KClO_4$, $[(n-Bu)_4N^+](AsF_6^-)$,
$[(n-Bu)_4N^+](PF_6^-)$, $[(n-Bu)_4N^+](ClO_4^-)$, $ZnSO_4$ and the like. (n-Bu = n-butyl). These electrolytes may be used individually or in combination of two or more.

As the anode material of the secondary cell, one may use, for example, such metals as Li, Na, K, Mg, Ca, Pb, Zn, Al, etc., or their alloys, conjugated high molecular weight compounds such as polyacetylene, polyparaphenylene, polyparaphenylenevinylene, etc., or their derivatives, and carbonaceous materials such as carbon fiber, graphite, etc. Other like materials may be used as well.

The secondary cell of this invention may have the following constitutions which are not definitive: polyaniline (anionic-doped)/electrolyte/conjugated polymer (cationic-doped); polyaniline/alkaline metal salt electrolyte/alkaline metal or aluminum-alkaline metal alloy; polyaniline/electrolyte/carbonaceous material (cationic-doped); and
polyaniline/electrolyte/active metal electrode (Pb, Zn, etc.).

As for the form of the electrode used in the secondary cell of this invention, the polyaniline having a fibrillar structure deposited on the electrode substrate by the electrochemical polymerization operation may be used as it is as a cathode, or it may be used in combination with a carbonaceous material. It is possible to employ the same form as conventional electrodes using conjugated polymers such as polyacetylene. Since the polyaniline used in this invention has a very large aspect ratio of fibrils, it can easily be shaped and can easily be combined with a carbon material.

The electrolyte medium may not necessarily be liquid if it enables electrochemical migration of the dopant. A solid electrolyte, either inorganic or organic, can be used.

Generally, a liquid electrolyte is used. Water or an organic solvent, or other suitable substance, can be used as the solvent (medium) for the electrolyte without any particular restriction. When using an organic solvent, a non-protonic organic solvent having a high dielectric constant is preferable. Examples of such organic solvents are propylene carbonate, tetrahydrofuran, 1,2-dimethoxyethane, sulfolane, 3-methylsulfolane, dichloroethane, $\gamma$-butyrolactone, dimethyl sulfoxide, dimethylformamide, dioxolan, acetonitrile, benzonitrile, nitromethane and dimethylacetamide. These organic solvents may be used singly or in combination of two or more.

The electrolyte concentration is not critical in this invention and it may be changed according to the type of electrolyte used and the type of solvent used, but usually it is preferably in the range of from 0.001 to 10 mole/litre, more preferably from 0.01 to 2 mole/litre.

Polyaniline having a fibrillar structure according to this invention, owing to the large surface area and high aspect ratio of the component fibrils, can be advantageously applied to secondary cells and electronic devices such as display elements and can be also utilized for forming useful composite materials. Further,

EP 0 224 989 B1

the secondary cell provided according to this invention has a large discharge capacity and excellent cycle (charging and discharging) characteristics and is of great industrial utility.

The present invention is described in further detail by the following Examples and Comparative Examples.

EXAMPLE 1

Electrochemical polymerization of aniline was carried out using a 1N aqueous $HClO_4$ solution containing 0,5 mole/litre aniline (guaranteed reagent, produced by Nakarai Chemical Co., Ltd.) as reaction solution at room temperature and a current density of 5 mA/cm² for a period of 1 minute 40 seconds, viz. at an electricity supply rate of 500 mC/cm², using a gold-deposited polyester film as working electrode and a platinum plate as counter electrode. The resulting polyaniline film was washed with water and then with methanol and dried in vacuo. Examination of this polyaniline with a scanning electron microscope (SEM) showed that fibrillar polyaniline was deposited on filmy polyaniline as shown in Figure 1. The average diameter of the fibrils was 0.1 μm.

EXAMPLE 2

By using a 1N aqueous $HClO_4$ solution containing 0.5 mole/litre of aniline as reaction solution and using a gold-deposited polyester film as working electrode and a platinum plate as counter electrode, electrochemical polymerization of aniline was carried out at room temperature under the conditions (current density and polymerization time) shown in Table 1. The resulting polyaniline containing $ClO_4^-$ ions was subjected to undoping by leaving it at a potential of 0 V vs Ag/AgCl reference electrode for about 10 minutes to remove $ClO_4^-$ ions. This polyaniline was washed with water and then with methanol, dried in vacuo and observed under a scanning electron microscope, which showed that the polymer was fibrillated. The average fibril diameter determined from the microphotograph is shown in Table 1, which shows that the fibril diameter is greater in the order of runs 3-2-1. Thus, it is possible to control the fibril diameter of this fibrillar polyaniline by adjusting the current density.

Table 1

| Run No. | Current density (mA/cm²) | Polymerization Average fibril time diameter (μm) | |
|---------|--------------------------|---------------------|------|
| 1 | 5 | 3 minutes | 0.1 |
| 2 | 0.5 | 30 minutes | 0.15 |
| 3 | 0.05 | 90 minutes | 0.3 |

EXAMPLE 3

Electrochemical polymerization of aniline was carried out with a 1N aqueous $HClO_4$ solution containing 0.5 mole/litre of aniline by using an ITO-deposited glass (NESA glass) as working electrode and a platinum plate as counter electrode at room temperature and a current density of 5 mA/cm² for a period of 12 minutes. The resulting polyaniline film was washed with water and then with methanol, dried in vacuo and observed under a scanning electron microscope. It was found that said polyaniline film had a homogenous fibrillar structure and the average diameter of the fibrils was 0.15 μm.

EXAMPLE 4

Electrochemical polymerization of aniline was carried out under the same conditions as in Example 2 except that the polymerization was conducted at a scanning speed of 50 mV/sec with a potential in the range of from -0.5 to +1.5 V (vs Ag/AgCl). in this experiment, the potential scanning was repeated 20 times. It was noted that the maximum value of oxidization current exceeded 5 mA after the 4th run of scanning.

Observation of the polyaniline produced under a scanning electron microscope showed that the polyaniline had a fibrillar structure and the average diameter of the fibrils was less than 0.1 μm.

EXAMPLE 5

5

A similar experiment was conducted under the same conditions as in Example 2 except that the polymerization was carried out by maintaining the potential of the working electrode at (1) 1.5 V or (2) 0.9 V (vs Ag/AgCl).

The polyaniline produced, when observed under a scanning electron microscope, had a fibrillar structure, and the average diameter of the fibrils was (1) 0.1 μm and (2) 0.15 μm. It was learned that the fibril diameter becomes smaller as the electrode potential increases. This is thought to be due to the rise of current density with the increase of potential.

EXAMPLE 6

Polyaniline was produced by the same procedure as in Example 3 except for the use of a 0.3N aqueous HClO$_4$ solution containing 0.2 mole/litre of aniline as reaction solution. The SEM image of the polyaniline produced showed that it was fibrillar.

EXAMPLE 7

The procedure of Example 3 was repeated except for the use of a 1.9N HClO$_4$ solution containing 1.8 mole/litre of aniline as reaction solution. The SEM image of the polyaniline produced shoved that it was fibrillar.

EXAMPLE 8

Polyaniline was produced by the procedure of Example 4 except for the use of a 2N H$_2$SO$_4$ solution containing 0.5 mole/litre of aniline. The SEM image of the polyaniline produced showed that it was fibrillar.

EXAMPLE 9

The procedure of Example 4 was repeated except for the use of a 1N HCl solution containing 0.5 mole/litre of aniline as reaction solution. The SEM image of the polyaniline produced showed that it was fibrillar.

EXAMPLE 10

The procedure of Example 4 was repeated but using a 1N p-toluenesulfonic acid solution containing 0.5 mole/litre of aniline as reaction solution. The SEM image of the polyaniline produced showed that it was fibrillar.

COMPARATIVE EXAMPLE 1

An experiment was carried out under the same conditions as in Example 3 except that a 1N HClO$_4$ solution containing 0.05 mole/litre of aniline was used as reaction solution. The polyaniline produced was not fibrillar but had an uneven film-like structure.

EXAMPLES 11-22 AND COMPARATIVE EXAMPLES 2-4

Similar experiments were conducted under various different conditions as shown in Table 2. The results are shown in Table 2.

Table 2

| No. | Aniline conc. (mole/ℓ) | Acid | | Current density, $(mA/cm^2)$ | Electrolytic potential (V vs Ag/ AgCl) | Electricity applied $(mC/cm^2)$ | Working electrode |
|---|---|---|---|---|---|---|---|
| | | Kind | Conc. (N) | | | | |
| Example 11 | 0.5 | HClO$_4$ | 1 | 5 | – | 500 | Au/PET |
| " 12 | " | " | " | " | – | " | Pt |
| " 13 | " | " | " | " | – | 3600 | " |
| " 14 | " | " | " | " | – | 6000 | " |
| " 15 | " | HBF$_4$ | " | " | – | " | " |
| " 16 | " | HClO$_4$ | 2 | " | – | " | " |
| " 17 | " | " | 1 | " | – | " | " |
| " 18 | " | " | " | " | – | " | NESA glass |
| " 19 | " | " | " | " | – | 12000 | " |
| Comp. Example 2 | " | " | " | " | – | 100000 | " |
| Example 20 | " | " | " | 0.5 | – | 150 | Au/PET |
| Comp. Example 3 | " | " | " | " | – | 36000 | Pt |
| Example 21 | " | " | " | – | 2.0 | 3600 | Au/PET |
| " 22 | " | " | " | – | 0.8 | " | " |
| Comp. Example 4 | " | " | " | – | 0.8 | 100000 | Pt |

Notes) Au/PET: Gold-deposited polyester film; Pt: platinum plate.

– Cont'd –

EP 0 224 989 B1

Table 2 (Cont'd)

| Polymerization temp. (°C) | Form of produced polyaniline | Fibril diameter (μm) |
|---|---|---|
| Room temp. | Fibrillar | about 0.1 |
| " | " | about 0.1 - 0.2 |
| " | " | " - 0.3 |
| " | " | " |
| " | " | " |
| 60 | " | " |
| Room temp. | " | 0.1 - 0.5 |
| " | Fibrillar and amorphous | 0.2 - 1.3 |
| " | Fibrillar | 0.1 - 0.3 |
| " | Amorphous | - |
| " | Fibrillar | 0.1 - 0.4 |
| " | " | " |
| " | Fibrillar and amorphous | 0.8 - 1.5 |

## EXAMPLE 23

Electrochemical polymerization of aniline was carried out with a 1N $HClO_4$ solution containing 0.5 mole/litre of aniline as reaction solution, by using a platinum plate for both the working electrode and the counter electrode, at a temperature of 60°C and a current density of 50 mA/cm², the quantity of electricity applied being 6 C/cm². The polyaniline produced was washed with water and then with methanol and dried in vacuo. Observation of this polyaniline with a scanning electron microscope showed that it had a fibrillar structure composed of tape-like fibrils rectangular in section as shown in Figure 2. Also, X-ray diffraction of this polyaniline showed a prominent peak at $2\theta = 19.5°$ as seen in Figure 3, which indicates that the polyaniline was crystalline.

## EXAMPLE 24

The procedure of Example 23 was repeated except that the quantity of electricity applied was 54 C/cm². The polyaniline produced had a substantially orthorhombic fibrillar structure. The X-ray diffraction pattern of this polyaniline was substantially identical with that of the polyaniline obtained in Example 23.

## EXAMPLE 25

Polyaniline was produced in the same way as in Example 23 except that a 1N $HBF_4$ solution containing 0.5 mole/litre of aniline was used as reaction solution and that the quantity of electricity applied was 54 C/cm². The polyaniline thus produced had a substantially fibrillar structure and was also crystalline.

## COMPARATIVE EXAMPLE 5

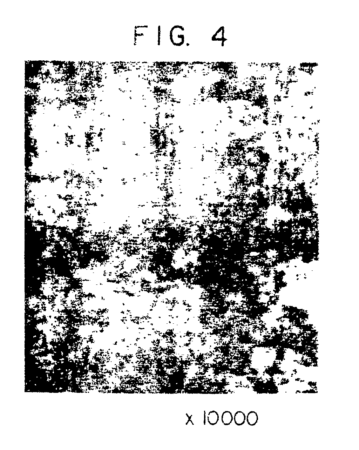

4 ml of aniline and 100 ml of 1N HCl were mixed, and, after sufficient purging with $N_2$, 50 ml of a 2 mole/litre aqueous solution of $(NH_3)_2S_2O_8$ was added dropwise to the mixture, whilst stirring, over a period of 40 minutes. After said dropwise addition, stirring of the mixture was continued for 20 hours 20 minutes to accomplish oxidative polymerization of aniline. The reaction solution was filtered with a glass filter to obtain a polymer powder. The polymer powder was stirred in 150 ml of water, and then again filtered and washed with 50 ml of water on the glass filter. The polymer powder obtained was dried in vacuo and examined with a scanning electron microscope. The SEM image (Figure 4) showed no fibrillation of the polymer. In the X-ray diffraction pattern thereof, no noticeable peak of crystals was seen near the area of $2\theta = 20°$.

## EXAMPLE 26

Electrochemical polymerization of aniline was carried out with a 1N $HClO_4$ solution containing 0.5 mole/litre of aniline, by using a platinum plate for both anode and cathode, at an anode current density of 5 $mA/cm^2$ for 20 minutes. Polyaniline was deposited on the anode. The deposit was washed with water and then dried.

By using the polyaniline-deposited platinum plate as cathode and a lithium strip as anode, a secondary cell was made with a propylene carbonate electrolyte containing 1 mole/litre of $LiClO_4$. This secondary cell was subjected to constant-current charging and discharging in an argon atmosphere. The secondary cell showed a maximum discharge capacity of 581 mC/mg, based on the weight of polyaniline exclusive of dopant $ClO_4$ ions, at a charging/discharging current density of 0.2 $mA/cm^2$. Also, it showed a maximum discharge capacity of 592 mC/mg at a charging/discharging current density of 3 $mA/cm^2$.

After said charging and discharging operations, scanning electron microphotographs of the polyaniline showed that this polyaniline was composed of fibrils having an average diameter of 0.2 $\mu m$.

In the following Examples and Comparative Examples, the maximum discharge capacity and charging capacity were calculated on the basis of the weight of polyaniline exclusive of dopant as in Example 26.

## EXAMPLE 27

A secondary cell was made in the same way as in Example 26, and this secondary cell, with a charging capacity of 300 mC/mg, was subjected to 535 charging and discharging cycles at a charging/discharging current density of 0.1 $mA/cm^2$. It showed an almost 100% coulomb efficiency throughout said cycles. Also, the polyaniline had a structure substantially composed of fibrils having an average diameter of 0.2 $\mu m$.

## EXAMPLE 28

Polyaniline was produced in the save way as in Example 26 except that the anode current density was 2.5 $mA/cm^2$ and the electrochemical polymerization time was 41 minutes. By using this polyaniline for the anode, a secondary cell was made according to the method of Example 26 and subjected to charging and discharging cycles at a current density of 0.2 $mA/cm^2$. It showed a maximum discharging capacity of 603 mC/mg. The polyaniline had a fibrillar structure, the average diameter of the fibrils being 0.3 $\mu m$.

## EXAMPLE 29

Electrochemical polymerization was carried out by using a gold-deposited polyester film as anode while using the same cathode and the same electrolyte as in Example 26 at an anode current density of 5 $mA/cm^2$ for a period of 25 minutes. The polyaniline deposited on the anode was washed with water and dried.

By using this polyaniline for the positive pole, a secondary cell was made by the method of Example 26 and subjected to charging and discharging cycles. It showed a maximum discharging capacity of 648 mC/mg and 672 mC/mg at charging/discharging current densities of 0.2 $mA/cm^2$ and 4 $mA/cm^2$, respectively. Said polyaniline was fibrillar and the average diameter of the fibrils was 0.2 $\mu m$.

## EXAMPLE 30

Polyaniline was obtained in the same way as in Example 29 except that the electrochemical polymerization was carried out at a constant potential of 0.9 V (vs an Ag/AgCl reference electrode) for a period of 30 minutes.

By using this polyaniline as the positive pole, a secondary cell was made according to the method of Example 26 and subjected to charging and discharging cycles. It showed a maximum discharging capacity of 620 mC/mg at a charging/discharging current density of 0.2 $mA/cm^2$. Said polyaniline had a structure composed of fibrils having an average diameter of 0.2 $\mu$m.

COMPARATIVE EXAMPLE 6

Polyaniline was produced in the same way as in Example 26 except that the electrochemical polymerization was carried out at an anode current density of 0.05 mA/cm$^2$ for 20 hours by using a 1N HClO$_4$ solution containing 0.1 mole/litre of aniline as reaction solution.

By using this polyaniline as the positive pole, a secondary cell was made by the method of Example 26 and subjected to charging and discharging cycles. It showed a maximum discharging capacity of at most 451 mC/mg at a charging/discharging current density of 0.2 mA/cm$^2$. The polyaniline had a fibrillar structure composed of fibrils having an average diameter of 0.7 $\mu$m.

COMPARATIVE EXAMPLE 7

A secondary cell was made in the same way as in Example 26 except that the polyaniline powder obtained in Comparative Example 5 was press molded into pellets and press bonded to a platinum mesh to form a lead, and this secondary cell was subjected to charging and discharging cycles. It showed a maximum discharging capacity of at most 78 mC/mg at a charging/discharging current density of 0.2 mA/cm$^2$.

## Claims

1. Polyaniline having a fibrillar structure, the average fibril diameter being 0.5$\mu$m or less.

2. Polyaniline according to claim 1, said polyaniline being crystalline.

3. A process for producing polyaniline having a fibrillar structure, which comprises carrying out electrochemical polymerization of aniline in an acidic aqueous solution, characterized in that said solution has an acid concentration of 0.2N or higher and an aniline concentration of 0.1 mole/litre or higher, and that the quantity of electricity applied at the time of polymerization is in the following range (A) or (B):
   (A) from 0.1 to 20 C/cm$^2$, when the temperature used for the electrochemical polymerization is lower than 40$^\circ$C;
   (B) from 0.1 to 1,000 C/cm$^2$, when the temperature used for the electrochemical polymerization is 40$^\circ$C or higher;

   and which, if necessary, is applied by potential scanning.

4. A process according to claim 3, wherein the aniline concentration of the solution is from 0.2 to 4 mole/litre.

5. A process according to claim 3 or claim 4, wherein the acid concentration of the solution is from 0.2 to 8.0N.

6. A process according to claim 5, wherein the acid concentration is from 0.5 to 4.0N.

7. A process according to any of Claims 3 to 6 wherein the acid is hydrofluoroboric and/or perchloric acid.

8. A secondary cell using, as its cathode material, polyaniline having a fibrillar structure in which the average diameter of the fibrils is 0.5$\mu$m or less.

9. A secondary cell according to claim 8, wherein said polyaniline is a polyaniline according to claim 1 or 2 or produced by a process according to any one of claims 3 to 7.

## Revendications

1. Polyaniline ayant une structure fibrillaire, le diamètre moyen des fibrilles étant de 0,5 $\mu$m ou moins.

2. Polyaniline selon la revendication 1, celle-ci étant cristalline.

EP 0 224 989 B1

3. Procédé de production d'une polyaniline ayant une structure fibrillaire, qui consiste à effectuer une polymérisation électrochimique de l'aniline dans une solution aqueuse acide, caractérisé en ce que ladite solution a une concentration en acide de 0,2 N ou plus et une concentration en aniline de 0,1 mole/litre ou plus, et en ce que la quantité d'électricité appliquée au moment de la polymérisation se trouve dans l'un des intervalles suivants (A) ou (B) :

(A) de 0,1 à 20 C/cm², quand la température utilisée pour la polymérisation électrochimique est inférieure à 40° C;

(B) de 0,1 à 1 000 C/cm², quand la température utilisée pour la polymérisation électrochimique est de 40° C ou plus;

et qui, si nécessaire, est appliquée par balayage de potentiel.

4. Procédé selon la revendication 3, dans lequel la concentration en aniline de la solution est de 0,2 à 4 moles/litre.

5. Procédé selon la revendication 3 ou la revendication 4, dans lequel la concentration en acide de la solution est de 0,2 à 8,0 N.

6. Procédé selon la revendication 5, dans lequel la concentration en acide est de 0,5 à 4,0 N.

7. Procédé selon l'une quelconque des revendications 3 à 6, dans lequel l'acide est l'acide hydrofluoroborique et/ou perchlorique.

8. Pile secondaire utilisant, comme matériau de cathode, une polyaniline ayant une structure fibrillaire dans laquelle le diamètre moyen des fibrilles est de 0,5 $\mu$m ou moins.

9. Pile secondaire selon la revendication 8, dans laquelle ladite polyaniline est une polyaniline selon la revendication 1 ou 2 ou obtenue par un procédé selon l'une quelconque des revendications 3 à 7.

**Patentansprüche**

1. Polyanilin mit Fibrillenstruktur, wobei der durchschnittliche Fibrillendurchmesser 0,5 $\mu$m oder weniger beträgt.

2. Polyanilin nach Anspruch 1, dadurch gekennzeichnet, daß es kristallin ist.

3. Verfahren zur Herstellung von Polyanilin mit Fibrillenstruktur durch elektrochemische Polymerisation von Anilin in einer sauren wäßrigen Lösung, dadurch gekennzeichnet, daß die Lösung eine Säurekonzentration von 0,2N oder höher und eine Anilinkonzentration von 0,1 Mol/1 oder höher aufweist und daß die zum Polymerisationszeitpunkt einwirkende Elektrizitätsmenge im folgenden Bereich (A) oder (B) liegt:

(A) wenn die bei der elektrochemischen Polymerisation eingehaltene Temperatur unter 40° C liegt, von 0,1 - 20 C/cm²;

(B) wenn die bei der elektrochemischen Polymerisation eingehaltene Temperatur 40° C oder mehr beträgt, von 0,1 - 1 000 C/cm²;

wobei diese erforderlichenfalls durch Potentialabtastung angelegt wird.

4. Verfahren nach Anspruch 3, dadurch gekennzeichnet, daß die Anilinkonzentration der Lösung 0,2 - 4 Mol/1 beträgt.

5. Verfahren nach Anspruch 3 oder 4, dadurch gekennzeichnet, daß die Säurekonzentration der Lösung 0,2 - 8,0N beträgt.

6. Verfahren nach Anspruch 5, dadurch gekennzeichnet, daß die Säurekonzentration 0,5 - 4,0N beträgt.

7. Verfahren nach einem der Ansprüche 3 bis 6, dadurch gekennzeichnet, daß die Säure aus Borfluorwasserstoffsäure und/oder Perchlorsäure besteht.

8. Sekundärelement, in dem als sein Kathodenmaterial ein Polyanilin mit Fibrillenstruktur eines durch-

11

schnittlichen Fibrillendurchmessers von 0,5 μm oder weniger verwendet wird.

9. Sekundärelement nach Anspruch 8, dadurch gekennzeichnet, daß es sich bei dem Polyanilin um ein solches nach Anspruch 1 oder 2 oder ein nach einem Verfahren gemäß einem der Ansprüche 3 bis 7 hergestelltes Polyanilin handelt.

FIG. 1

x 10000

FIG. 2

x 10000

# F I G. 3

F I G. 4

x 10000